# EUROPÄISCHE PATENTANMELDUNG

(11) **EP 2 730 843 A1**
(43) Veröffentlichungstag der Anmeldung: **14.05.2014**
(21) Anmeldenummer: 13191945.8
(22) Anmeldetag: 07.11.2013
(51) Int. Cl.: F23M 5/02, F23R 3/00

(54) **Brennkammerschindel einer Gasturbine**

(30) Priorität: 13.11.2012 DE 102012022199
(71) Anmelder: Rolls-Royce Deutschland Ltd & Co KG, 15827 Blankenfelde-Mahlow (DE)
(72) Erfinder: Clemen, Carsten, Dr., 15749 Mittenwalde (DE)
(74) Vertreter: Hoefer & Partner

(57) **Zusammenfassung**

Die Erfindung bezieht sich auf eine Brennkammerschindel einer Gasturbine mit einem Bolzen 38 zur Lagerung der Brennkammerschindel 34 an einer Brennkammerwand 32, wobei die Brennkammerschindel 34 im Wesentlichen plattenförmig ausgebildet ist und an einer Seite zumindest ein Lagerelement 40 aufweist, an welchem der als separates Bauteil ausgebildete Bolzen 38 formschlüssig verankert ist.

## Beschreibung

Die Erfindung bezieht sich auf Gasturbinenbrennkammem mit Brennkammerschindeln, wobei die Brennkammerschindeln an einer tragenden Struktur der Brennkammeraußenwände befestigt sind.

Die Brennkammerschindeln weisen eine beliebige (sehr hohe, oftmals mehrere Tausend) Anzahl von Effusionskühllöchern auf der zur Brennkammer gerichteten Seite auf. Diese Effusionskühllöcher dienen dazu, die Schindel gegenüber den hohen Temperaturen in der Brennkammer zu kühlen. Darüber hinaus befindet sich auf der Brennkammerschindel mindestens ein Mischluftloch, das dazu dient, Luft aus dem die Brennkammer außen umgebenden Raum (Ringkanal/Annulus) in die Brennkammer zum Zwecke des Abkühlens und Abmagerns der Verbrennung und damit der Reduktion der NOx Entstehung in die Brennkammer zu leiten. Neben der Kühlung durch die Effusionskühllöcher sind die Schindeln häufig noch mit einer keramischen Beschichtung versehen, die als Dämmschicht gegen die hohen Temperaturen in der Brennkammer wirkt.

Diese Anordnung ist aus dem Stand der Technik bekannt, siehe EP 972 992 B1 oder DE 102 14 570 A1.

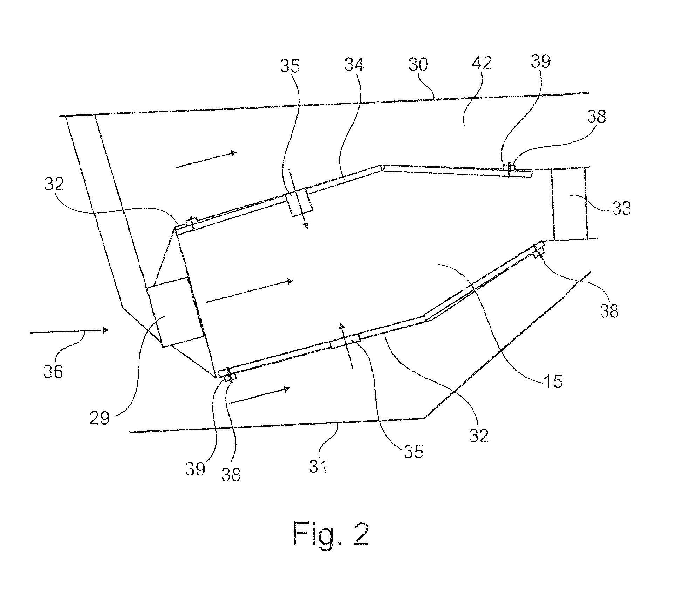

Die Figur 2 zeigt schematisch eine Brennkammer 15. Die Brennkammer 15 umfasst eine Treibstoffdüse 29, welche in üblicher Weise an einem Brennkammerkopf gehaltert ist. Weiterhin sind ein Brennkammeraußengehäuse 30 sowie ein Brennkammerinnengehäuse 31 vorgesehen. Eine Brennkammerwand 32 umschließt die eigentliche Brennkammer 15 und trägt Brennkammerschindeln 34. Das Bezugszeichen 33 zeigt schematisch eine Turbinenvorleitreihe. Durch Zumischlöcher 35 wird in üblicher Weise Luft zugeführt. Die Zuströmrichtung ist mit dem Bezugszeichen 36 bezeichnet.

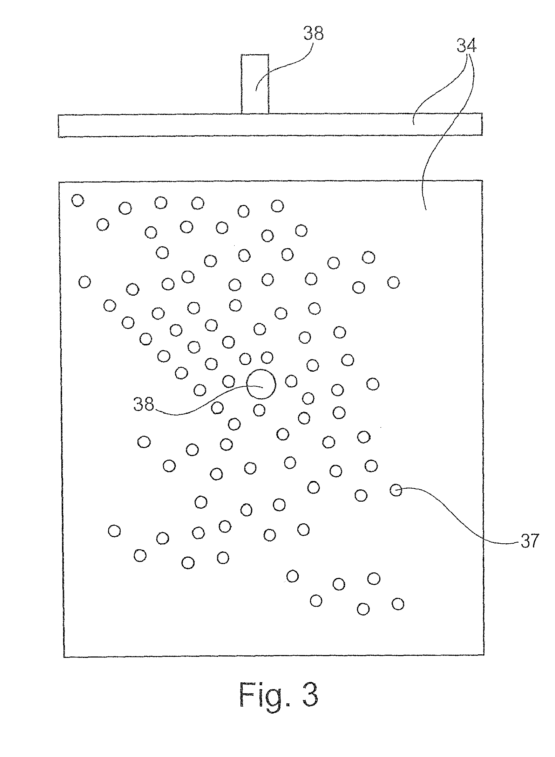

Die Figur 3 zeigt eine Schindel 34 mit Effusionskühllöchern 37 gemäß dem Stand der Technik. Die Geometrie (Durchmesser, Form) des Zumischlochs 35 kann, wie aus dem Stand der Technik bekannt, in geeigneter Weise ausgebildet werden. Gleiches trifft für die Größe und Anordnung der Effusionskühllöcher 37 zu. Die Ausbildung der Zumischlöcher 35 erfolgt häufig so, dass diese konstruktiv wie ein Trichter oder ein Rohr, das in die Brennkammer 15 hineinragt, ausgebildet sind.

Die Herstellung der Schindeln 34 erfolgt üblicherweise entweder durch Gießen, Beschichten mit einer keramischen Schicht und Bohren der Effusionskühllöcher 37 (z.B. mit Laser) oder durch Gießen, Bohren und Beschichten oder durch ein additives Fertigungsverfahren, wie z.B. Selective Laser Sintering, Direct Laser Depositioning oder mittels Elektronenstrahlauftragsschweißen. Bei den additiven Verfahren werden dabei die Effusionskühllöcher 37 direkt in die Schindel 34 eingebracht und das aufwändige Bohren entfällt.

Während des Betriebs treten immer wieder Probleme mit sogenanntem Kriechen des Materials auf, welches zum Versagen des Gewindestiftes führen kann und damit zu einem Verlust der Schindel.

Darüber hinaus ist die Konstruktion der Schindel mit integriertem Gewindestift nur bedingt für eine additive Fertigung, z.B. Selective Laser Sintering, Direct Laser Depositioning oder Elektronenstrahlauftragsschweißen, geeignet, da entweder die kostenintensive horizontale Fertigung gewählt werden muss oder eine aufwändige Unterkonstruktion zur Abstützung des Gewindestiftes vorgesehen werden muss. Eine solche Unterkonstruktion hat wesentliche Nachteile. Sie ist a) materialintensiv, b) sie verlängert den Fertigungsprozess und c) sie muss nach der Fertigung von der Schindel entfernt werden. Dies ist sehr kostenintensiv.

Der Erfindung liegt die Aufgabe zugrunde, eine Brennkammerschindel einer Gasturbine und eine Befestigungsmöglichkeit einer derartigen Brennkammer zu schaffen, welche bei einfachem Aufbau und einfacher, kostengünstiger Herstellbarkeit die Nachteile des Standes der Technik vermeiden und eine gute Befestigbarkeit gewährleisten.

Erfindungsgemäß wird die Aufgabe durch die Merkmalskombination des Anspruches 1 gelöst, die Unteransprüche zeigen weitere vorteilhafte Ausgestaltungen der Erfindung.

Erfindungsgemäß ist somit vorgesehen, dass die Schindel im Wesentlichen plattenförmig ausgebildet ist und an einer Seite (nämlich an der der Brennkammerwand zugewandten Seite) zumindest ein Lagerelement aufweist, welches einstückig an der Schindel ausgebildet ist. Das Lagerelement ist so ausgebildet, dass an diesem ein Bolzen, welcher als separates Bauteil gefertigt ist, formschlüssig verankerbar oder befestigbar ist.

Die erfindungsgemäße Brennkammerschindel ist somit so ausgebildet, dass ein separater Bolzen, der erfindungsgemäß ein Gewindebolzen oder ein mit einem Sicherungselement zu befestigender Bolzen sein kann, formschlüssig an der Schindel verankert wird. Somit ist es erfindungsgemäß möglich, den Bolzen aus einem anderen Material zu fertigen, als die Schindel. Weiterhin ist es möglich, für die Schindel ein einfaches und kostengünstiges Herstellungsverfahren zu wählen, da der Bolzen als separates Bauteil hergestellt werden kann. Insbesondere durch die Möglichkeit, für die Schindel und den Bolzen unterschiedliche Materialien zu verwenden, ist es möglich, die beim Stand der Technik bekannten Befestigungsprobleme zu lösen und ein Kriechen des Bolzen-Werkstoffs zu unterbinden oder zu minimieren.

Erfindungsgemäß ist bevorzugterweise vorgesehen, dass der Bolzen an seinem Endbereich mit einem rechtwinklig zur Bolzenachse angeordneten Lagerbereich versehen ist, welcher in einer Ausnehmung des Lagerelements angeordnet ist. Der Bolzen ist somit hakenförmig, insbesondere L-förmig, ausgebildet, und wird in die Ausnehmung des Lagerelements eingesteckt. Dabei kann der Lagerbereich des Bolzens in geeigneter Weise dimensioniert werden, beispielsweise plattenförmig oder mit beliebigen sonstigen Querschnitten, beispielsweise rund, oval, viereckig oder rechteckig. Die Brennkammerschindel hat somit durch das Lagerelement und die darin vorgesehene Ausnehmung eine Aufnahme für den Bolzen, so dass dieser formschlüssig in die Schindel eingehängt werden kann. Dabei ist es erfindungsgemäß möglich, den Lagerbereich mit Spiel oder ohne Spiel in der Ausnehmung aufzunehmen, insbesondere, um unterschiedliche Wärmeausdehnungen oder ähnliches zu berücksichtigen.

Die Ausnehmung des Lagerelements ist so ausgebildet, dass der Lagerbereich des Bolzens seitlich eingesteckt werden kann. Um beim Betrieb ein Herausrutschen des Lagerbereichs des Bolzens aus der Ausnehmung des Lagerelements zu vermeiden, kann es in Weiterbildung der Erfindung günstig sein, an einer Schindel mehrere derartige Lagerelemente vorzusehen, deren Ausnehmungen sich zu unterschiedlichen Richtungen hin öffnen. Hierdurch wird ein Lösen des Bolzens verhindert.

Der erfindungsgemäße Bolzen wird in üblicher Weise durch ein Loch der Brennkammeraußenwand gesteckt, so dass sich die eigentliche Befestigung des Bolzens nicht wesentlich vom Stand der Technik unterscheidet. So ist es möglich, bei einem Gewindebolzen in üblicher Weise eine Mutter aufzuschrauben.

Die erfindungsgemäße Ausgestaltung ermöglicht es auch, die Schindel gegenüber der Brennkammerwand abzustützen oder in alternativer Ausgestaltung die Schindel direkt an die Brennkammerwand anzulegen. Somit können unterschiedliche Kühlkonzepte ausgebildet werden, so wie dies auch aus dem Stand der Technik bekannt ist.

Weiterhin ist es erfindungsgemäß möglich, die Außenkontur des Lagerelements, welches an der Brennkammerschindel befestigt ist, strömungsgünstig auszubilden, beispielsweise mit abgeschrägten Flanken zu versehen. In dem Lagerelement können erfindungsgemäß auch Effusionskühllöcher ausgebildet sein, um die Kühlung der Brennkammerschindel zu gewährleisten.

Der erfindungsgemäße Bolzen mit dem an ihm ausgebildeten Lagerbereich kann gegossen, gefräst oder durch ein additives Verfahren hergestellt werden.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Seitenansicht (im Schnitt) einer Brennkammer gemäß dem Stand der Technik,
- Fig. 3: eine Draufsicht und eine Seitenansicht einer aus dem Stand der Technik bekannten Brennkammerschindel,
- Fig. 4: eine Seiten-Schnittansicht einer Befestigungsmöglichkeit einer Brennkammerschindel an der Brennkammeraußenwand gemäß dem Stand der Technik,
- Fig. 5: unterschiedliche Seitenansichten von unterschiedlichen Ausführungsbeispielen des erfindungsgemäßen Bolzens mit Lagerbereich,
- Fig. 6: eine Draufsicht auf eine Brennkammerschindel der Erfindung mit Lagerelement und Bolzen,
- Fig. 7: Seitenansichten unterschiedlicher Zuordnungen von dem Bolzen zu dem Lagerelement,
- Fig. 8: eine Darstellung, analog Fig. 7,
- Fig. 9: vereinfachte Draufsichten auf unterschiedliche Ausgestaltungsformen von Brennkammerschindeln mit mehreren Lagerelementen,
- Fig. 10: Seitenansichten eines erfindungsgemäßen Ausführungsbeispiels analog Fig. 4,
- Fig. 11 und 12: Ausführungsbeispiele unterschiedlicher Lagerelemente mit Effusionskühllöchern,
- Fig. 13: eine Darstellung eines weiteren Ausführungsbeispiels, analog Fig. 10, mit Sicherungsstift,
- Fig. 14: Draufsichten unterschiedlicher Montagezustände eines weiteren Ausführungsbeispiels der Erfindung, analog der Darstellung der Fig. 6,
- Fig. 15: unterschiedliche Anordnungen gemäß dem Ausführungsbeispiel der Fig. 14,
- Fig. 16: unterschiedliche Montagezustände, analog Fig. 8, des in den Fig. 14 und 15 gezeigten Ausführungsbeispiels,
- Fig. 17: eine Darstellung analog Fig. 10,
- Fig. 18: eine vereinfachte Seitenansicht unterschiedlicher Ausgestaltungsformen des Lagerelements gemäß dem Ausführungsbeispiel der Fig. 14 bis 17,
- Fig. 19: vereinfachte Seiten-Schnittansichten unterschiedlicher Ausführungsvarianten, analog der Darstellung der Fig. 12,
- Fig. 20: Darstellungen analog der Fig. 13,
- Fig. 21: Ansichten eines weiteren Ausführungsbeispiels des erfindungsgemäßen Bolzens, analog Fig. 5,
- Fig. 22: unterschiedliche Zuordnungen zwischen Bolzen und Brennkammerschindel, analog der Darstellung der Fig. 15,
- Fig. 23: unterschiedliche Montagezustände, analog Fig. 16, und
- Fig. 24: vereinfachte Draufsichten auf das Ausführungsbeispiel, analog der Fig. 14.

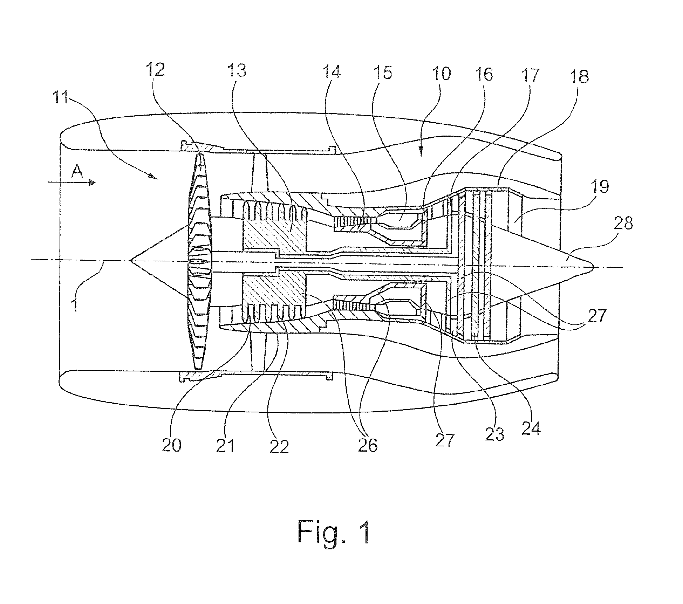

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, Brennkammern 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

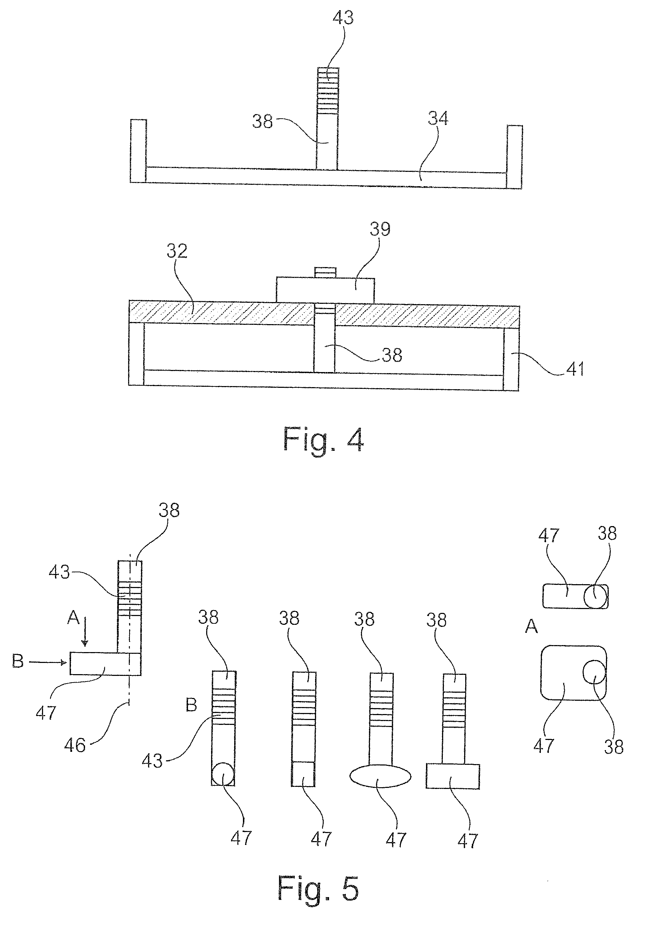

Die Fig. 4 zeigt unterschiedliche Seitenansichten gemäß dem Stand der Technik, in denen eine Abstützung 41 der Brennkammerschindel 34 gegen die Brennkammerwand 32 dargestellt ist.

Die Fig. 5 zeigt eine erste Gruppe von Ausführungsbeispielen des erfindungsgemäßen Bolzens 38, der als Gewindebolzen (Gewinde 43) ausgebildet ist und an seinem unteren Endbereich mit jeweils einem Lagerbereich 47 versehen ist. Der Lagerbereich 47 erstreckt sich rechtwinklig zu der Bolzenachse 46, so dass sich eine hakenartige Struktur ergibt. Die linke Darstellung der Fig. 5 zeigt eine Seitenansicht, während die beiden rechten Darstellungen jeweils Draufsichten unterschiedlicher Ausgestaltungen der Lagerbereiche 47 zeigen. Diese sind stabförmig oder plattenförmig ausgebildet und haben, so wie in den mittleren vier Abbildungen der Fig. 5 gezeigt, wahlweise unterschiedliche Querschnitte, nämlich rund, quadratisch, elliptisch oder rechteckig.

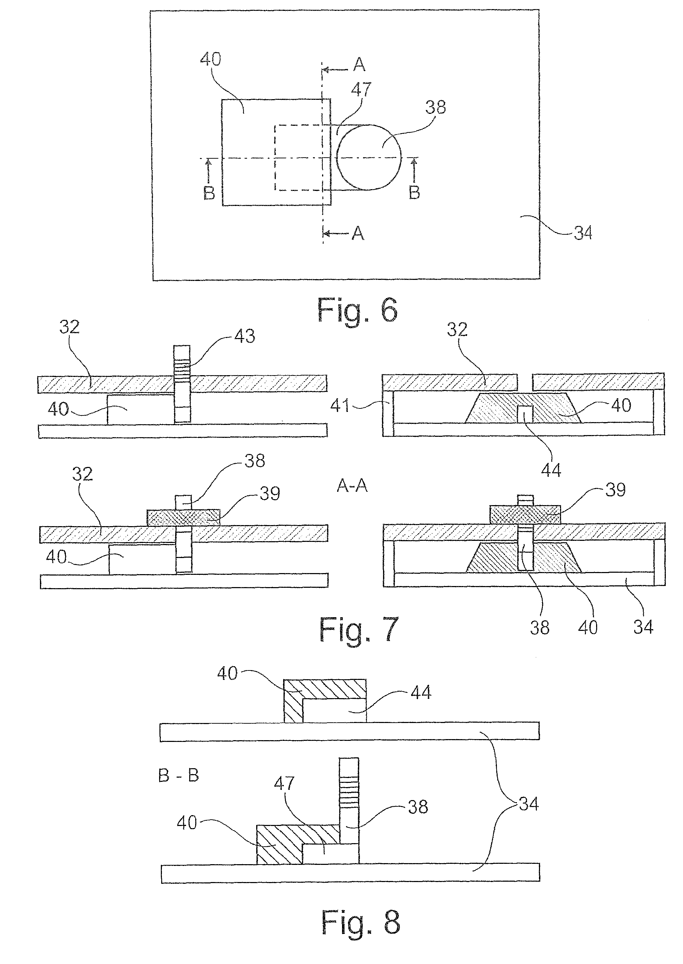

Die Fig. 6 zeigt eine Draufsicht auf ein Ausführungsbeispiel der Brennkammerschindel 34, an welcher, wie nachfolgend in den Fig. 7 und 8 dargestellt, ein Lagerelement 40 einstückig befestigt ist. Dieses weist eine Ausnehmung 44 auf, in welche der Lagerbereich 47 des Bolzens 38 einsteckbar ist. Der Bolzen 38 wird somit, ähnlich einem Haken, in das Lagerelement 40 eingehakt und kann nachfolgend mittels der Mutter 39 verschraubt werden, so wie dies die Fig. 7 in unterschiedlichen Seitenansichten darstellt. Die Fig. 8 zeigt in der oberen Hälfte die Ausnehmung 44 im leeren Zustand, während in der unteren Bildhälfte der Lagerbereich 47 des Bolzens 38 eingesteckt ist.

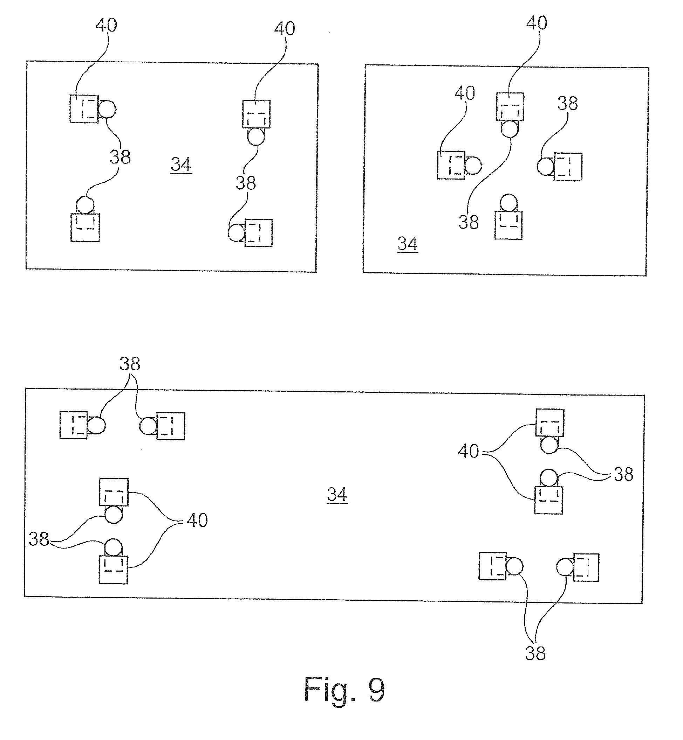

Die Fig. 9 zeigt vereinfachte Draufsichten auf unterschiedliche Ausführungsbeispiele von Brennkammerschindeln 34. Daraus ist ersichtlich, dass diese jeweils mit mehreren Lagerelementen 40 versehen sind. Die Öffnungen der Ausnehmungen 44 sind jeweils unterschiedlich ausgerichtet, so dass es beim Betrieb der Gasturbine nicht möglich ist, dass sich die Bolzen mit ihren Lagerbereichen 47 von den Lagerelementen 40 lösen.

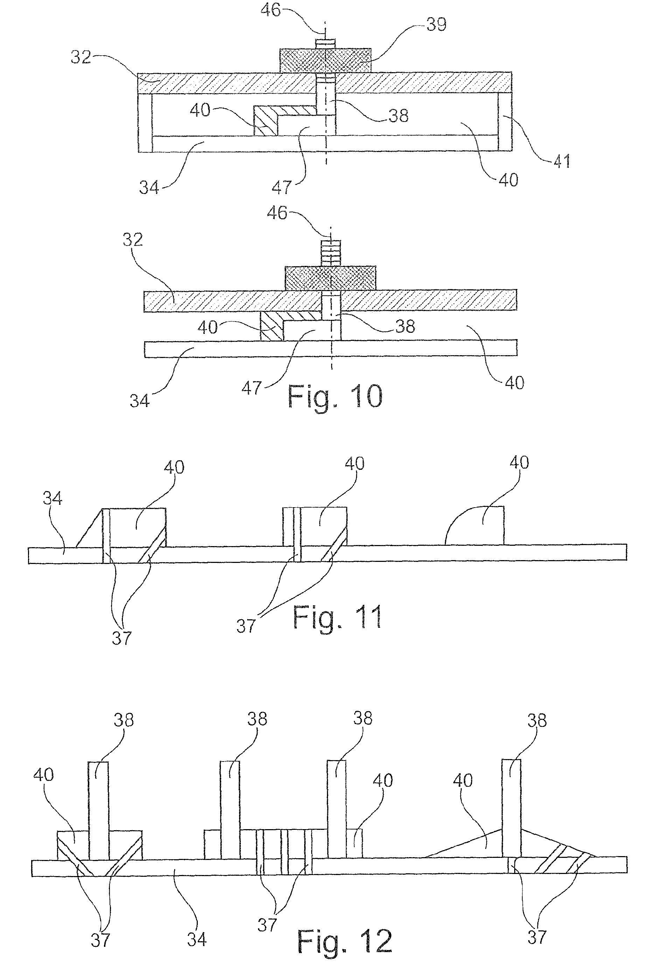

Die Fig. 10 zeigt eine Darstellung analog der Fig. 4, aus welcher sich ergibt, dass die Brennkammerschindel 34 entweder über Abstützungen 41 beabstandet werden kann oder dass das jeweilige Lagerelement 40 direkt gegen die Brennkammerwand 32 anliegt.

Die Fig. 11 und 12 zeigen unterschiedliche Querschnitte, analog unterschiedlichen Ausgestaltungsformen der Lagerelemente 40, mit Effusionskühllöchern 37.

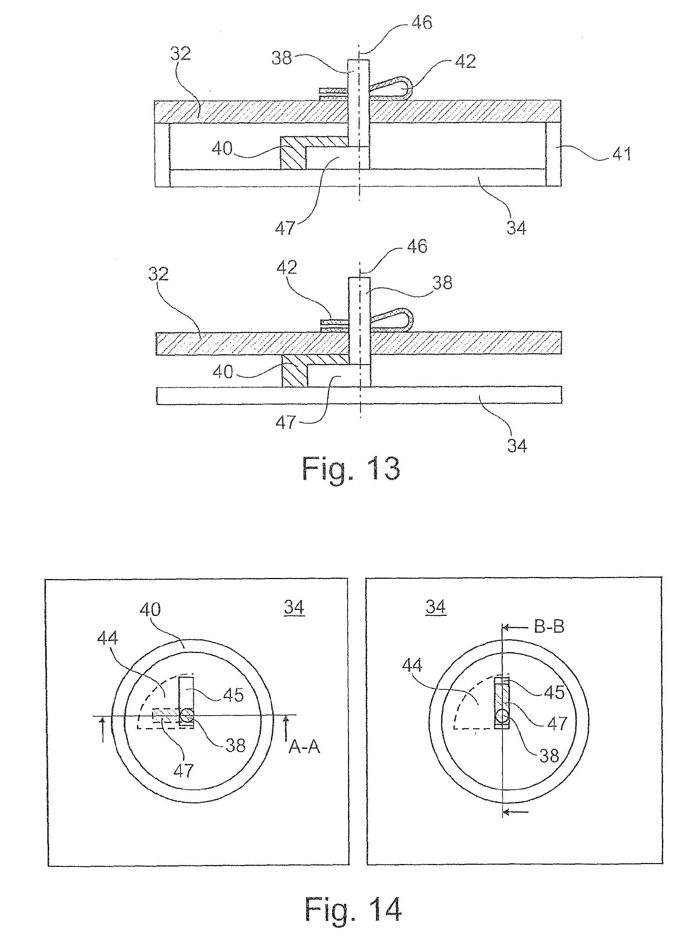

Die Fig. 13 zeigt ein Ausführungsbeispiel des Bolzens 38 analog Fig. 10, wobei der Bolzen 38 mittels eines Sicherungsstifts 42 an der Brennkammerwand 32 gehalten ist.

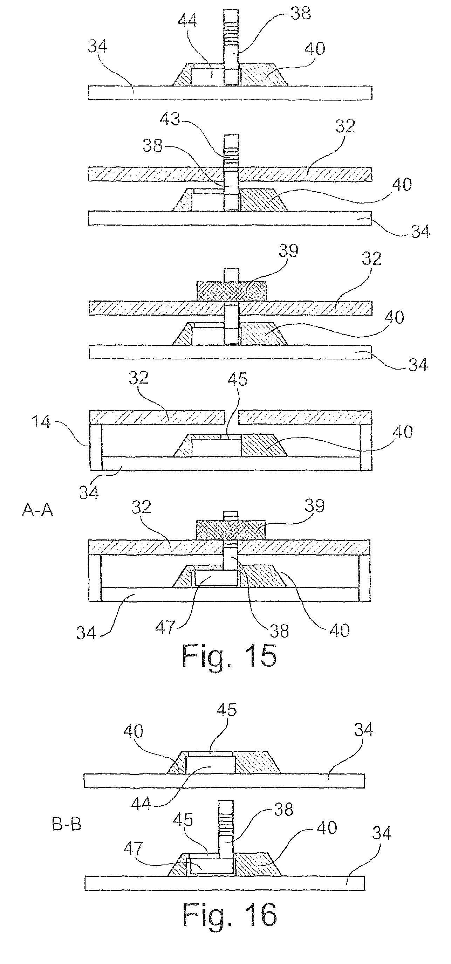

In der Fig. 14 und den nachfolgenden Ausführungsbeispielen ist eine weitere erfindungsgemäße Ausgestaltungsvariante gezeigt, analog den Darstellungen der Fig. 6 bis 8. Gleiche Teile sind mit gleichen Bezugsziffern versehen. Im Unterschied zu der ersten Gruppe von Ausführungsbeispielen weist das den Fig. 14 und folgende zugrundeliegende Konzept jeweils eine Ausnehmung 44 auf, welche nur über einen Schlitz 45 geöffnet ist. Durch den Schlitz 45 wird der Lagerbereich 47 des Bolzens 38 eingesteckt. Durch eine nachfolgende Drehung des Bolzens 38, beispielsweise um 90°, ist der Lagerbereich 47 in der Ausnehmung 44 fest verankert. Die Fig. 14 zeigt in der rechten Darstellung das Einstecken des Bolzens 38 mit dem Lagerbereich 47, während die linke Bildhälfte der Fig. 14 den gedrehten und damit verriegelten Zustand zeigt. Diese Situation ist auch in den Darstellungen der Fig. 15 zu entnehmen. Die Fig. 16 zeigt die leere Ausnehmung 44 und in der unteren Bildhälfte den eingesteckten Lagerbereich 47 des Bolzens 38.

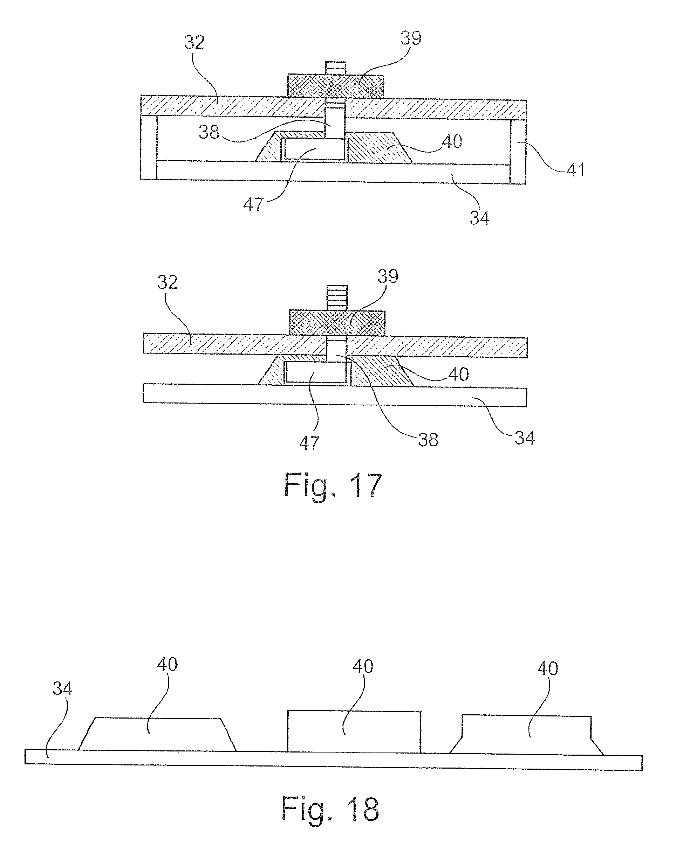

Die Fig. 17 zeigt eine Darstellung analog Fig. 10, aus welcher sich die Befestigung der Brennkammerschindel an der Brennkammerwand bei dem hier beschriebenen Ausführungsbeispiel ersehen lässt, nämlich einmal durch direkte Anlage des Lagerbereichs 40 und zum anderen durch eine zwischengelagerte Abstützung 41.

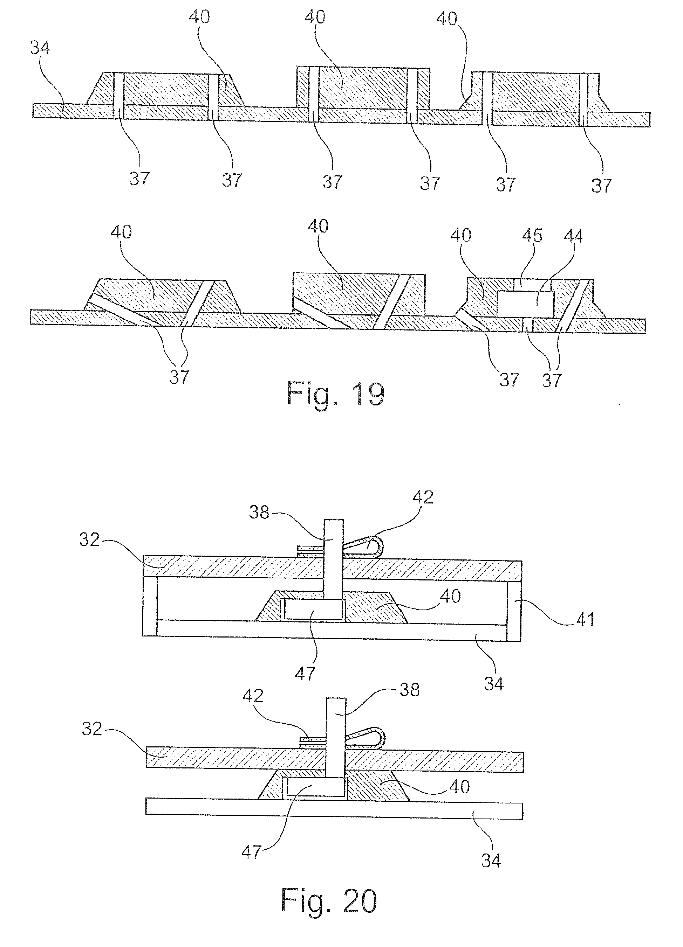

Die Fig. 18 zeigt zusammen mit der Fig. 19 unterschiedliche Ausgestaltungsvarianten des Lagerelements 40 bei dem hier beschriebenen Ausführungskonzept, wobei in Fig. 19 die Anordnungen von Effusionskühllöchern 37 gezeigt sind.

Die Fig. 20 zeigt eine Darstellung, analog der Fig. 13, unter Verwendung eines Sicherungsstifts 42.

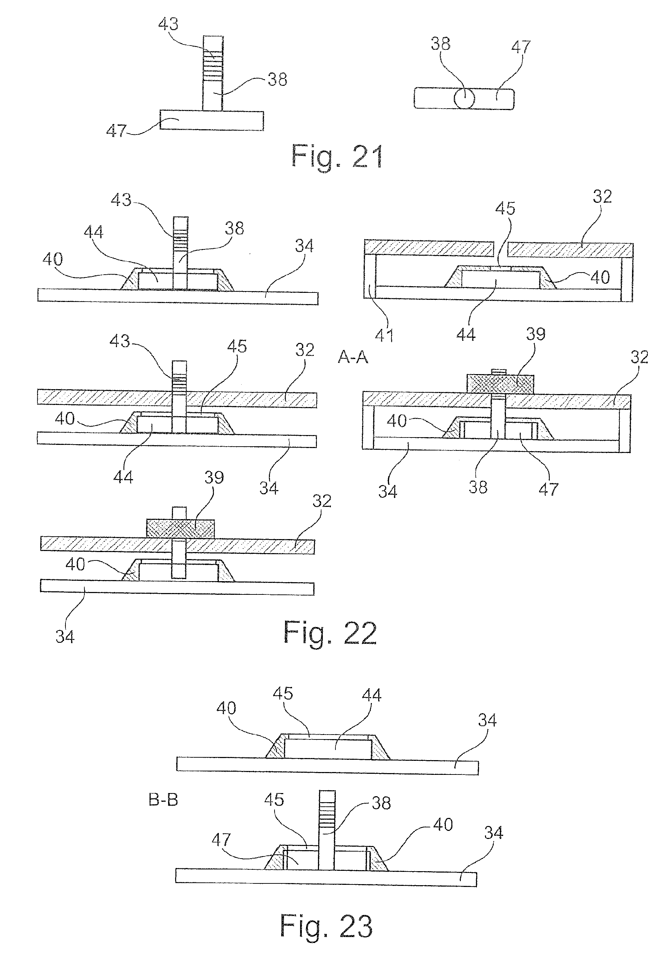

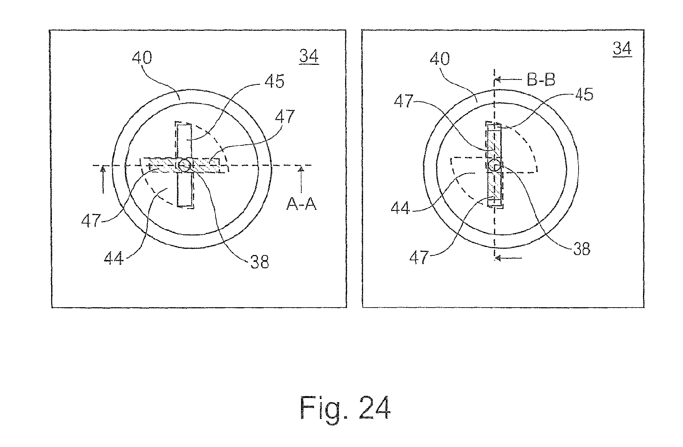

In den Fig. 21 folgende wird eine weitere Ausgestaltungsvariante analog den Fig. 14 bis 20 beschrieben, wobei gleiche Teile wiederum mit gleichen Bezugsziffern versehen sind und wobei auf die obige Beschreibung verwiesen werden kann, sofern die Darstellungen identisch oder ähnlich sind. Das Ausführungsbeispiel zeigt, wie aus der Fig. 21 im Vergleich zur Fig. 5 ersichtlich ist, eine Variante, bei welcher an dem Bolzen 38 zwei gegenüberliegende Lagerbereiche 47 ausgebildet sind. Es ergibt sich somit eine T-förmige Ausgestaltung. Bei dieser ist es möglich, analog dem Ausführungsbeispiel der Fig. 14 bis 20, den Lagerbereich 47 des Bolzens 38 durch einen doppelt ausgebildeten Schlitz 45 einzustecken und nachfolgend den Bolzen 38 um die Bolzenachse 46 zu drehen. Dies ist insbesondere in Fig. 24 analog zu Fig. 14 dargestellt, die rechte Darstellung der Fig. 24 zeigt das Einfügen des Bolzens 38, während die linke Darstellung eine um 90° gedrehte Position zeigt. Entsprechend zeigen die Fig. 22 und 23 jeweils analog den Fig. 15 und 16 doppelt ausgebildete Ausnehmungen 40.

### Bezugszeichenliste:

- 1: Triebwerksachse
- 10: Gasturbinentriebwerk
- 11: Lufteinlass
- 12: im Gehäuse umlaufender Fan
- 13: Mitteldruckkompressor
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Treibstoffdüse
- 30: Brennkammeraußengehäuse
- 31: Brennkammerinnengehäuse
- 32: Brennkammerwand
- 33: Turbinenvorleitreihe
- 34: Brennkammerschindel
- 35: Zumischloch
- 36: Zuströmrichtung
- 37: Effusionskühlloch
- 38: Bolzen
- 39: Mutter
- 40: Lagerelement
- 41: Abstützung
- 42: Sicherungsstift
- 43: Gewinde
- 44: Ausnehmung
- 45: Schlitz
- 46: Bolzenachse
- 47: Lagerelement

## Patentansprüche

1. Brennkammerschindel einer Gasturbine mit einem Bolzen (38) zur Lagerung der Brennkammerschindel (34) an einer Brennkammerwand (32), wobei die Brennkammerschindel (34) im Wesentlichen plattenförmig ausgebildet ist und an einer Seite zumindest ein Lagerelement (40) aufweist, an welchem der als separates Bauteil ausgebildete Bolzen (38) formschlüssig verankert ist.

2. Brennkammerschindel nach Anspruch 1, **dadurch gekennzeichnet, dass** der Bolzen (38) an seinem Endbereich mit einem rechtwinklig zur Bolzenachse (46) angeordneten Lagerbereich (47) versehen ist, welcher in einer Ausnehmung (44) des Lagerelements (40) angeordnet ist.

3. Brennkammerschindel nach Anspruch 2, **dadurch gekennzeichnet, dass** der Bolzen (38) mit dem Lagerbereich (47) in Richtung der Bolzenachse (46) des Bolzens (38) in das Lagerelement (40) einsteckbar und um die Bolzenachse (46) um einen vorgegebenen Winkelbereich drehbar ist.

4. Brennkammerschindel nach Anspruch 2, **dadurch gekennzeichnet, dass** der Bolzen (38) mit dem Lagerbereich (47) in Richtung senkrecht zur Bolzenachse (46) des Bolzens (38) in die Ausnehmung (44) einsteckbar ist.

5. Brennkammerschindel nach einem der Ansprüche 1 bis 4, **dadurch gekennzeichnet, dass** an der Brennkammerschindel (34) mehrere Lagerelemente (40) ausgebildet sind, deren Ausnehmungen (44) zu unterschiedlichen Richtungen offen ausgebildet sind.

6. Brennkammerschindel nach einem der Ansprüche 1 bis 5, **dadurch gekennzeichnet, dass** das Lagerelement (40) mit Effusionskühllöchern (37) versehen ist.

7. Brennkammerschindel nach einem der Ansprüche 1 bis 6, **dadurch gekennzeichnet, dass** der Lagerbereich (47) mit oder ohne Spiel in dem Lagerelement (40) aufgenommen ist.

8. Brennkammerschindel nach einem der Ansprüche 1 bis 7, **dadurch gekennzeichnet, dass** der Lagerbereich (47) plattenförmig oder stabförmig ausgebildet ist.

9. Brennkammerschindel nach einem der Ansprüche 1 bis 8, **dadurch gekennzeichnet, dass** der Bolzen (38) als Gewindebolzen ausgebildet ist.

10. Brennkammerschindel nach einem der Ansprüche 1 bis 9, **dadurch gekennzeichnet, dass** der Bolzen (38) und die Brennkammerschindel (34) aus unterschiedlichen Materialien gefertigt sind.

## Geänderte Patentansprüche

### Geänderte Patentansprüche gemäss Regel 137(2) EPÜ.

**1.** Brennkammerschindel einer Gasturbine mit einem Bolzen (38) zur Lagerung der Brennkammerschindel (34) an einer Brennkammerwand (32), wobei die Brennkammerschindel (34) im Wesentlichen plattenförmig ausgebildet ist und an einer Seite zumindest ein Lagerelement (40) aufweist, an welchem der als separates Bauteil ausgebildete Bolzen (38) formschlüssig verankert ist, wobei der Bolzen (38) an seinem Endbereich mit einem rechtwinklig zur Bolzenachse (46) angeordneten Lagerbereich (47) versehen ist, welcher in einer Ausnehmung (44) des Lagerelements (40) angeordnet ist, **dadurch gekennzeichnet, dass** die Brennkammerschindel (34) mit zumindest einer Abstützung (41) zur Abstützung und Beabstandung gegen die Brennkammerwand (32) versehen ist und dass das Lagerelement (40) eine Höhe aufweist, welche kleiner ist, als die Höhe der Abstützung (41).

**2.** Brennkammerschindel nach Anspruch 1, **dadurch gekennzeichnet, dass** der Bolzen (38) mit dem Lagerbereich (47) in Richtung der Bolzenachse (46) des Bolzens (38) in das Lagerelement (40) einsteckbar und um die Bolzenachse (46) um einen vorgegebenen Winkelbereich drehbar ist.

**3.** Brennkammerschindel nach Anspruch 1 oder 2, **dadurch gekennzeichnet, dass** der Bolzen (38) mit dem Lagerbereich (47) in Richtung senkrecht zur Bolzenachse (46) des Bolzens (38) in die Ausnehmung (44) einsteckbar ist.

**4.** Brennkammerschindel nach einem der Ansprüche 1 bis 3, **dadurch gekennzeichnet, dass** an der Brennkammerschindel (34) mehrere Lagerelemente (40) ausgebildet sind, deren Ausnehmungen (44) zu unterschiedlichen Richtungen offen ausgebildet sind.

**5.** Brennkammerschindel nach einem der Ansprüche 1 bis 4, **dadurch gekennzeichnet, dass** das Lagerelement (40) mit Effusionskühllöchern (37) versehen ist.

**6.** Brennkammerschindel nach einem der Ansprüche 1 bis 5, **dadurch gekennzeichnet, dass** der Lagerbereich (47) mit oder ohne Spiel in dem Lagerelement (40) aufgenommen ist.

**7.** Brennkammerschindel nach einem der Ansprüche 1 bis 6, **dadurch gekennzeichnet, dass** der Lagerbereich (47) plattenförmig oder stabförmig ausgebildet ist.

**8.** Brennkammerschindel nach einem der Ansprüche 1 bis 7, **dadurch gekennzeichnet, dass** der Bolzen (38) als Gewindebolzen ausgebildet ist.

**9.** Brennkammerschindel nach einem der Ansprüche 1 bis 8, **dadurch gekennzeichnet, dass** der Bolzen (38) und die Brennkammerschindel (34) aus unterschiedlichen Materialien gefertigt sind.
